(19) **Europäisches Patentamt European Patent Office Office européen des brevets**

(11) **EP 4 193 334 B1**

(12) **FASCICULE DE BREVET EUROPEEN**

(45) Date de publication et mention de la délivrance du brevet:
**15.04.2026 Bulletin 2026/16**

(21) Numéro de dépôt: **21773644.6**

(22) Date de dépôt: **03.08.2021**

(51) Classification Internationale des Brevets (IPC):
**G06T 7/00** *(2017.01)* **G06T 7/32** *(2017.01)*

(52) Classification Coopérative des Brevets (CPC):
**G06T 7/001; G06T 7/32;** G06T 2207/10081; G06T 2207/30164

(86) Numéro de dépôt international:
**PCT/FR2021/051437**

(87) Numéro de publication internationale:
**WO 2022/029385 (10.02.2022 Gazette 2022/06)**

(54) **PROCÉDÉ DE CARACTERISATION D'UNE STRUCTURE FIBREUSE TISSÉE**

**VERFAHREN ZUR CHARAKTERISIERUNG EINER GEWEBTEN FASERSTRUKTUR**

**METHOD OF CHARACTERISING A WOVEN FIBROUS STRUCTURE**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.08.2020 FR 2008290**

(43) Date de publication de la demande:
**14.06.2023 Bulletin 2023/24**

(73) Titulaires:
- **SAFRAN AIRCRAFT ENGINES**
  **75015 Paris (FR)**
- **SAFRAN**
  **75015 Paris (FR)**
- **Centre National de la Recherche Scientifique**
  **75016 Paris (FR)**
- **Ecole Normale Supérieure Paris-Saclay**
  **91190 Gif-sur-Yvette (FR)**

(72) Inventeurs:
- **SCHNEIDER-DIE-GROSS, Julien, Paul**
  **77550 MOISSY-CRAMAYEL (FR)**
- **BELHAJ SAAD, Intisar**
  **77550 MOISSY-CRAMAYEL (FR)**
- **MENDOZA QUISPE, Arturo**
  **77550 MOISSY-CRAMAYEL (FR)**
- **PARRA, Estelle, Marie, Laure**
  **77550 MOISSY-CRAMAYEL (FR)**
- **ROUX, Stéphane**
  **93110 ROSNY-SOUS-BOIS (FR)**

(74) Mandataire: **Cabinet Beau de Loménie**
  **103, rue de Grenelle**
  **75340 Paris Cedex 07 (FR)**

(56) Documents cités:
**EP-A1- 3 084 405 WO-A1-2015/033044**
**FR-A1- 3 042 869 FR-A1- 3 050 274**

- **HRISHIKESH BALE ET AL: "Characterizing Three-Dimensional Textile Ceramic Composites Using Synchrotron X-Ray Micro-Computed-Tomography", JOURNAL OF THE AMERICAN CERAMIC SOCIETY, vol. 95, no. 1, 31 January 2012 (2012-01-31), US, pages 392 - 402, XP055331937, ISSN: 0002-7820, DOI: 10.1111/ j.1551-2916.2011.04802.x**

EP 4 193 334 B1

## Description

### Domaine Technique

L'invention s'inscrit dans le domaine de la conception, de la caractérisation et du suivi de pièces pour l'industrie, notamment des pièces devant subir des sollicitations mécaniques importantes, comme par exemple des pièces de moteurs d'avion. L'invention concerne plus particulièrement la caractérisation de structure fibreuses tissées ou des pièces en matériau composite comprenant une structure fibreuse en tant que renfort fibreux densifiée par une matrice.

### Technique antérieure

La plupart des renforts fibreux tissés destinés à être utilisés pour fabriquer une pièce en matériau composite sont fournis tout d'abord sous forme plane en sortie de métier à tisser. L'ébauche obtenue doit être mise en forme pour épouser par la suite la forme du moule dans lequel sera réalisée sa densification, par exemple par injection d'une résine et polymérisation de celle-ci. La mise en forme de l'ébauche et l'injection de l'ébauche mise en forme (ou préforme) peut occasionner des modifications substantielles de la disposition des fils ou torons au sein de la préforme. Ces modifications peuvent inclure par exemple des décadrages, correspondants à une modification de l'angle initial de 90° entre les fils de chaîne et les fils de trame, ou des glissements de colonnes de chaîne ou de trame les unes par rapport aux autres. Ces modifications du renfort peuvent avoir un impact sur la tenue mécanique de la pièce et son comportement sous contraintes, ce qui justifie le besoin de les caractériser avec précision pour pouvoir optimiser le procédé de fabrication.

On connait la technique de tomographie aux rayons X (CT pour « Computed Tomography »). Ce moyen expérimental exploite l'absorption différentielle des rayons X par différents matériaux pour reconstruire, par le calcul, à partir d'une série de radiographies, une image tridimensionnelle de la pièce étudiée. L'information contenue dans les images de tomographie est précieuse car elle concerne l'ensemble du volume de la pièce et donne accès non seulement à la microstructure de celle-ci mais aussi potentiellement à ses défauts.

Lorsque l'on cherche à étudier les déplacements de fils ou torons dans une ébauche fibreuse obtenue par tissage tridimensionnel, dans une préforme fibreuse obtenue par mise en forme d'une telle ébauche, ou dans une pièce en matériau composite comprenant une telle préforme en tant que renfort fibreux, des problèmes peuvent se poser qui sont illustrés à l'aide de l'exemple ci-après.

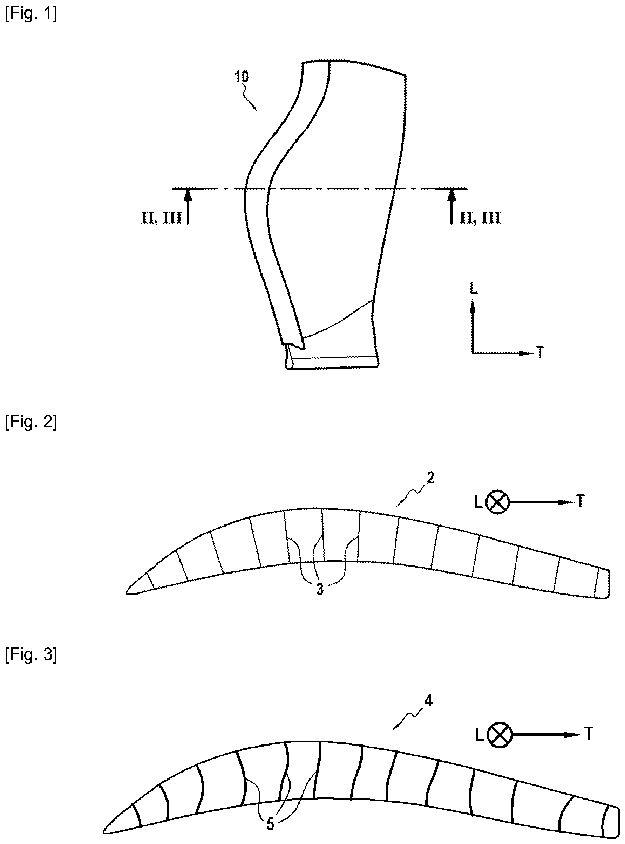

La figure 1 montre une aube 1 de turbomachine aéronautique comprenant un renfort fibreux densifié par une matrice. Une telle aube 1 peut présenter une double cambrure sur sa longueur selon la direction longitudinale L, aussi appelée « twist ». Pour obtenir une telle forme, l'ébauche initialement plane devra être mise en forme dans un outillage adapté ou directement dans le moule d'injection.

La figure 2 est une vue simplifié en coupe d'une préforme fibreuse d'aube 2 obtenue par tissage tridimensionnel de fils longitudinaux (s'étendant selon la direction longitudinale L) ou fils de chaîne, avec des fils transversaux (s'étendant selon une direction transversale T) ou fils de trame, qui a été mise en forme pour obtenir une cambrure caractéristique de l'aube 1. L'orientation simplifiée attendue de quelques colonnes de fils de chaîne suite à l'étape de mise en forme est identifiée par des lignes 3.

La figure 3 est une vue en coupe réalisée à partir d'une tomographie aux rayons X d'une préforme fibreuse 4 résultant de la mise en forme d'une ébauche fibreuse obtenue par tissage tridimensionnel. Sur cette figure, on a identifié des colonnes de fils de chaîne par des lignes 5 dont on observe qu'elles ont été déformées sur la figure 2. Cette déformation (transformation géométrique) est induite par le processus de fabrication et se présente comme des plans initiaux de chaine et de trame qui deviennent des surfaces courbes.

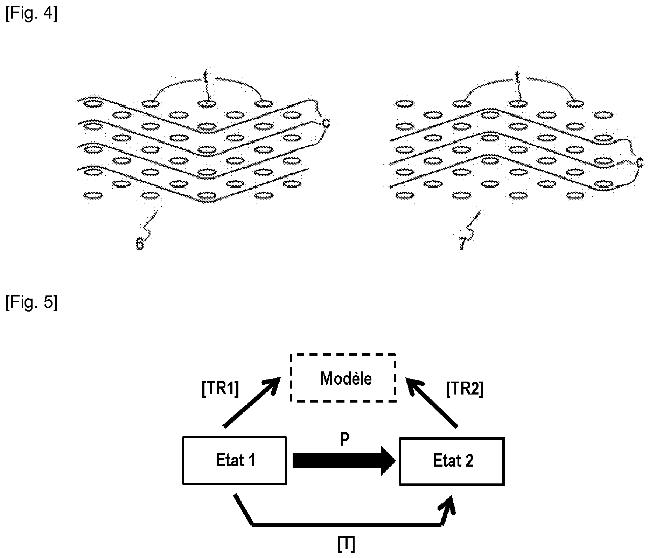

La figure 4 montre deux exemples de plans de tissage simplifiés successifs 6 et 7 d'une structure fibreuse tissée avec une armure interlock. On a identifié des fils de chaîne c et des fils de trame t. On voit que les motifs de tissage sont très proches et se différencient généralement par de simples déphasages entre deux plans voisins. Les motifs de tissage sont en effet périodiques ou proche de la périodicité au sein de la structure tissée.

A cause de telles déformations et des différences minimes entre deux plans de tissage successifs, il est difficile voire impossible dans cette situation de visualiser un plan de tissage qui s'étend perpendiculairement au plan de la figure 3 pour contrôler la qualité du tissage et en déduire d'éventuels défauts liés à des déplacements de fils ou torons. Il serait donc souhaitable de pouvoir identifier les transformations ayant eu lieu lors de la mise en forme afin de pouvoir redresser l'image obtenue. Dans ce contexte, le terme « redresser » correspond à une retransformation de la géométrie du tissage dans son état simplifié.

Dans le cas présent, l'identification de ces déplacements est réalisée manuellement via l'analyse d'images tomographiques.

Le brevet WO2015/033044 A1 (SAFRAN [FR]) (2015-03-12) divulgue un procédé de caractérisation d'une pièce en matériau composite tissé comprenant le calcul des valeurs d'autocorrélation d'une image en trois dimensions du volume de la pièce acquise dans une fenêtre d'observation pour déterminer une moyenne de la distance entre fils parallèles voisins.

Les brevets FR3050274 A1 (SNECMA [FR]; SAFRAN [FR]) (2017-10-20), EP3084405 A1 (SNECMA [FR]; CENTRE NAT RECH SCIENT [FR] ET AL.) (2016-10-26) et la publication Characterizing Three-Dimensional Textile Ceramic Composites Using Synchrotron X-Ray Micro-Computed-Tomography", de HRISHIKESH BALE ET

AL. dans JOURNAL OF THE AMERICAN CERAMIC SOCIETY, vol. 95, no. 1, (2012-01-31), pages 392-402, divulguent un procédé d'analyse d'une pièce pour aéronautique constituée d'un renfort comprenant une pluralité de torons de chaine et une pluralité de torons de trame positionnées en couches, permettant d'identifier des défauts de fabrication de la pièce. Une analyse géométrique et/ou topologique de la pièce est effectuée à partir d'une image volumique de la pièce et d'une modélisation des torons extraits dans l'image volumique.

Le brevet FR3042869 A1 (SNECMA [FR]) (2017-04-28) divulgue la réalisation d'une analyse statistique de la trame et de la chaine d'un textile fibreux composite à partir d'une image volumique CT, afin de révéler les éventuels défauts de résistance du textile.

Il existe donc un besoin pour un procédé de caractérisation qui soit plus robuste dans le cadre de l'étude de structures fibreuses obtenues par tissage tridimensionnel.

**Exposé de l'invention**

A cet effet, l'invention propose un procédé de caractérisation selon la revendication 1.

Par « tissage tridimensionnel », « tissage 3D », « tissage multicouches » on entend ici un mode de tissage par lequel certains au moins des fils de chaîne (ou fils longitudinaux) lient des fils de trame (ou fils transversaux) sur plusieurs couches de trame. Un tel tissage peut être réalisé dans un métier à tisser de type jacquard, de façon connue en soi. Dans un exemple de réalisation, le motif donné de tissage peut être du type interlock. Par «interlock », il faut comprendre une armure de tissage tridimensionnel dont chaque couche de fils de chaîne lie plusieurs couches de fils de trame avec tous les fils de la même colonne de chaîne ayant le même mouvement dans le plan de l'armure. Le document WO2006/136755 décrit la réalisation de telles armures de tissage.

Par plan ou ligne « intermédiaire » il faut comprendre un plan ou une ligne qui n'est pas située sur un bord de l'image volumique ou bidimensionnelle considérée.

Les inventeurs ont développé un procédé de caractérisation qui, au lieu de se baser sur la comparaison directe entre deux états d'une même structure fibreuse tissée pour en déduire la transformation reliant ces deux états, part du principe qu'il est possible de séparer la transformation liant les deux états de la structure en deux transformations secondaires qui relient chaque état à un modèle de la structure, par exemple un modèle non déformé de la structure. La combinaison des transformations secondaires permet de trouver la transformation liant les deux états considérés. Le modèle simplifié se manifeste dans le procédé selon l'invention sous la forme du profil de référence auquel on compare le profil unidimensionnel obtenu à partir de l'image volumique initiale.

Le procédé selon l'invention est en outre remarquable en ce qu'il est adapté à la caractérisation de structures fibreuses tissées présentant un motif donné périodique. A l'aide de chacun des traitements d'image on simplifie la résolution du problème de caractérisation, d'abord en obtenant une image tridimensionnelle filtrée, puis une image bidimensionnelle filtrée, puis en extrayant au moins un profil unidimensionnel de l'image bidimensionnelle qui est représentatif de la position des colonnes de fils ou torons selon une direction du tissage à une position du volume considérée. Le filtrage permet de s'affranchir des difficultés liées à la répétition des motifs de tissage suivant les différentes directions. On peut alors par comparaison avec un profil de référence à une dimension, par exemple construit à partir d'un modèle de tissage simplifié, obtenir des informations sur le déplacement des colonnes de fils ou torons au niveau d'une ligne donnée par rapport à ce modèle de tissage simplifié. La comparaison est ainsi grandement simplifiée puisque réalisée à une dimension inférieure que si l'on travaille directement sur l'image volumique. En outre, les algorithmes de corrélation d'images numériques (CIN) (Sutton, M. A., Orteu, J. J., & Schreier, H. (2009). « Image correlation for shape, motion and deformation measurements: basic concepts, theory and applications. Springer Science & Business Media ») qui peuvent être utilisés pour la comparaison ont plus de facilités à converger grâce au filtrage.

Il est ensuite possible de réaliser une itération sur toutes les lignes du même plan intermédiaire et dans les deux directions de tissage, puis sur plusieurs plans consécutifs de l'image volumique en prenant en compte les résultats obtenus à une seule dimension pour le plan intermédiaire, pour obtenir des informations sur les déplacements intervenus dans le volume de l'image par rapport à un modèle simplifié de tissage. En obtenant des informations sur les transformations entre l'image volumique réelle et un modèle de tissage simplifié, on peut caractériser plus facilement les déplacements intervenant dans les différentes étapes de traitement d'une structure fibreuse tissée pour fabriquer une pièce en matériau composite.

Dans un exemple de réalisation, le procédé peut comprendre en outre la détermination d'un champ de déplacements à partir du résultat de la comparaison. En d'autres termes, un résultat de l'étape de comparaison peut être un champ de déplacement. Ce champ de déplacement peut être obtenu à l'aide d'un algorithme de CIN.

L'étude des champs de déplacement entre différentes étapes d'un procédé de fabrication de la pièce en matériau composite permet de comprendre l'influence des paramètres du métier à tisser (étape de tissage), la cinématique de mise en forme de l'ébauche pour permettre de prévoir numériquement le passage d'une configuration à une autre (étape de mise en forme), ou encore d'évaluer les contraintes résiduelles tridimensionnelles en fin de fabrication (étape d'injection de résine).

Dans un exemple de réalisation, une étape de comparaison peut correspondre à une étape d'alignement du profil unidimensionnel sur le profil de référence. En particulier, cette étape peut être réalisée à l'aide d'un algorithme de CIN adapté au cas unidimensionnel.

Dans un exemple de réalisation, le filtrage du premier et/ou du deuxième traitement peut être un filtrage gaussien où la largeur du filtre est déterminée en fonction d'un espacement moyen entre des couches de fils ou torons selon la direction de filtrage considérée. En particulier, la largeur du filtrage gaussien peut être comprise entre T et quelques T où T est l'espacement moyen entre des couches de fils ou torons selon la direction de filtrage considérée et dans l'échantillon considéré.

Dans un exemple de réalisation, le procédé peut comprendre en outre une étape d'obtention de plusieurs profils unidimensionnels à des lignes consécutives de l'image bidimensionnelle filtrée, et une étape de comparaison de manière itérative à partir de la ligne intermédiaire de chaque profil unidimensionnel obtenu avec le profil de référence en prenant en compte le résultat de la comparaison réalisée à une ligne précédente. En particulier, on peut réaliser l'étape de comparaison de manière itérative en commençant par la ligne intermédiaire et jusqu'aux bords de l'image bidimensionnelle filtrée, en réalisant deux passages : un en direction de chaque bord opposé de l'image. L'ensemble des résultats obtenus pour un même plan est ainsi cohérent et ne présente pas de discontinuités. Les résultats obtenus pour le plan intermédiaire peuvent ensuite être utilisés pour initialiser des comparaisons entre les images bidimensionnelles de plans successifs de l'image volumique et un modèle bidimensionnel simplifié.

Dans un exemple de réalisation, le procédé peut comprendre en outre, après avoir comparé tous les profils unidimensionnels dans la première et la deuxième direction au profil de référence, une étape d'obtention de plusieurs images bidimensionnelles à des plans consécutifs de l'image volumique filtrée, et une étape de comparaison de manière itérative à partir du plan intermédiaire de chaque image bidimensionnelle obtenue avec une image bidimensionnelle de référence en prenant en compte le résultat de la comparaison réalisée à un plan précédent. En particulier, on peut réaliser l'étape de comparaison de manière itérative en commençant par le plan intermédiaire et jusqu'aux bords de l'image volumique filtrée, en réalisant deux passages : un en direction de chaque bord opposé de l'image. On peut ainsi réaliser un alignement de l'ensemble de l'image volumique en s'assurant de la convergence des algorithmes de CIN, qui sont initialisés avec les résultats obtenus à une itération précédente, et en commençant avec les résultats obtenus pour le plan intermédiaire à une dimension.

Dans un exemple de réalisation, l'image volumique peut être obtenue par tomographie à rayons X.

L'invention a également pour objet un système de caractérisation à partir d'une image volumique d'une structure fibreuse présentant un tissage tridimensionnel selon un motif donné entre une pluralité de fils ou torons de chaîne s'étendant selon une première direction et une pluralité de fils ou torons de trame s'étendant selon une deuxième direction perpendiculaire à la première, le système comprenant :

- un premier module de traitement de l'image volumique par filtrage selon une troisième direction perpendiculaire à la première et à la deuxième directions de sorte à atténuer les motifs périodiques selon la troisième direction,
- un module d'obtention d'une image bidimensionnelle représentant des fils ou torons de chaîne et des fils ou torons de trame, ladite image correspondant à un plan intermédiaire selon la troisième direction de l'image volumique filtrée,
- un deuxième module de traitement de l'image bidimensionnelle par filtrage selon la première ou la deuxième direction de sorte à atténuer les motifs périodiques selon la première ou la deuxième direction,
- un module d'obtention d'un profil unidimensionnel représentant les positions de colonnes de fils ou torons de trame ou de chaîne, ledit profil correspondant à une ligne intermédiaire selon la première ou la deuxième direction de l'image bidimensionnelle filtrée, et
- un module de comparaison du profil unidimensionnel avec un profil de référence.

L'invention propose également un programme d'ordinateur comportant des instructions pour l'exécution des étapes d'un procédé tel que défini ci-avant lorsque ledit programme est exécuté par un ordinateur.

A noter que les programmes d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention propose également un support d'enregistrement lisible par un ordinateur sur lequel est enregistré un programme d'ordinateur comprenant des instructions pour l'exécution des étapes d'un procédé tel que défini ci-avant.

Les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

L'invention vise aussi un procédé de fabrication d'une pièce en matériau composite comprenant un renfort fibreux densifié par une matrice, le procédé comprenant la fabrication de la pièce en matériau composite à partir d'une structure fibreuse obtenue par tissage tridimensionnel, et la caractérisation de la pièce par un procédé de caractérisation tel que celui présenté ci-avant. La fabrication de la pièce en matériau composite peut comprendre une étape de tissage de la structure fibreuse, une étape de mise en forme de la structure fibreuse, et une étape d'injection d'une matrice (par exemple une résine) dans la porosité de la structure fibreuse mise en forme.

Dans un exemple de réalisation, un procédé de tissage d'une structure fibreuse peut comprendre le tissage de la structure fibreuse par tissage tridimensionnel, et la caractérisation de la structure fibreuse par un procédé de caractérisation tel que celui présenté ci-avant.

Dans un exemple de réalisation, un procédé de mise en forme d'une structure fibreuse obtenue par tissage tridimensionnel peut comprendre la mise en forme de la structure fibreuse et la caractérisation de la structure fibreuse ainsi tissée par un procédé de caractérisation tel que celui présenté ci-avant.

Dans un exemple de réalisation, un procédé de densification d'une structure fibreuse obtenue par tissage tridimensionnel peut comprendre l'injection d'une résine dans la porosité de la structure fibreuse pour former une pièce en matériau composite et la caractérisation de la pièce ainsi formée par un procédé de caractérisation tel que celui présenté ci-avant.

**Brève description des dessins**

[Fig. 1] La figure 1 est une vue schématique d'une aube de soufflante de turbomachine aéronautique.

[Fig. 2] La figure 2 est une vue simplifié en coupe d'une structure fibreuse tissée pour fabriquer une aube telle que celle de la figure 1 montrant l'alignement simplifié de plusieurs colonnes de fils de chaîne.

[Fig. 3] La figure 3 est une vue en coupe réalisée à partir d'une tomographie aux rayons X d'une structure fibreuse tissée pour fabriquer une aube telle que celle de la figure 1 montrant le désalignement (l'inclinaison, courbure, inflexion ou forme plus complexe) de plusieurs colonnes de fils de chaîne.

[Fig. 4] La figure 4 montre deux plans de tissage simplifiés dans une structure fibreuse tissée à armure interlock.

[Fig. 5] La figure 5 illustre la décomposition de la transformation reliant deux états déformés d'une structure en faisant intervenir un modèle de la structure.

[Fig. 6] La figure 6 illustre un modèle de tissage simplifié pour une armure interlock.

[Fig. 7] La figure 7 est une image volumique obtenue par tomographie aux rayons X d'une pièce comprenant une structure fibreuse tissée à armure interlock. Dans cette visualisation les échelles X, Y, Z ne sont pas égales.

[Fig. 8] La figure 8 est un ordinogramme montrant les principales étapes d'un procédé de caractérisation selon un mode de réalisation de l'invention.

[Fig. 9] La figure 9 montre l'image volumique utilisée pour illustrer le procédé et le résultat obtenu suite au premier traitement d'image. Dans cette visualisation les échelles X, Y, Z ne sont pas égales.

[Fig. 10] La figure 10 montre l'image bidimensionnelle extraite et le résultat obtenu suite au deuxième traitement d'image. Dans cette visualisation les échelles X, Y ne sont pas égales.

[Fig. 11] La figure 11 montre le profil unidimensionnel extrait et la comparaison entre ledit profil et un profil de référence.

[Fig. 12] La figure 12 montre l'image bidimensionnelle de référence utilisée pour aligner les images bidimensionnelles et l'image bidimensionnelle alignée ou corrigée du plan intermédiaire. Dans cette visualisation les échelles X, Y ne sont pas égales.

[Fig. 13] La figure 13 montre un système de caractérisation selon un mode de réalisation de l'invention.

## Description des modes de réalisation

Le procédé selon l'invention concerne les structures fibreuses tissées par tissage tridimensionnel, mais aussi les pièces en matériau composite qui intègrent de telles structures fibreuses tissées en tant que renfort fibreux.

La figure 5 illustre un principe à la base de l'invention selon lequel pour caractériser la structure fibreuse, on décompose la transformation reliant deux états de la structure (définis en termes de déformations) en plusieurs transformations secondaires reliant chaque état à un modèle simplifié ou de référence de la structure. Chacune de ces transformations secondaires sont déterminées par un algorithme de corrélation d'images numériques (CIN).

On considère une structure fibreuse dans un Etat 1 de déformations qui subit ensuite une transformation [T] au cours d'un procédé P. Le procédé P peut être par exemple une étape de tissage de la structure fibreuse, de mise en forme ou de densification par injection d'une matrice. Il est possible de décomposer la transformation [T] en utilisant un état de la structure correspondant à un modèle simplifié de la structure. On définit alors une transformation [TR1] qui relie l'Etat 1 de la structure au Modèle, et une transformation [TR2] qui relie l'Etat 2 de la structure au Modèle. Alors, la transformation [T] peut être vue comme la combinaison des transformations [TR1] et [TR2]$^{-1}$. En accédant aux transformations [TR1] et [TR2] on peut obtenir la transformation [T] reliant deux états de la structure fibreuse. Cette décomposition permet en outre de pouvoir redresser l'image volumique de la structure dans un état donné afin de pouvoir étudier ses déformations dans l'optique du contrôle de qualité.

Dans le présent texte, on emploie indifféremment le terme « fils » pour désigner des fils ou des torons.

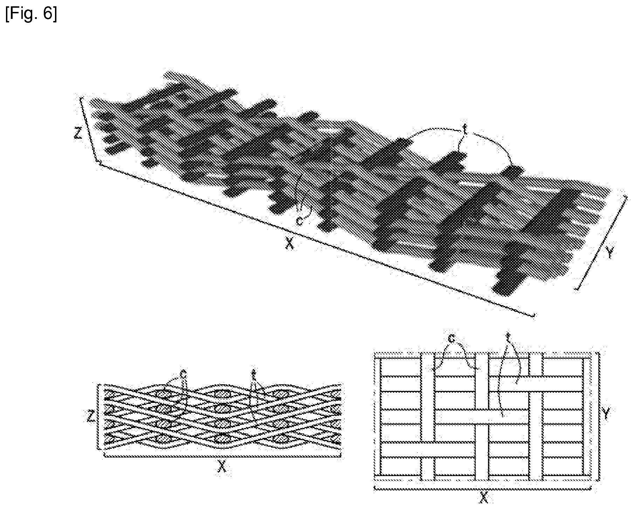

La figure 6 illustre plusieurs vues d'un modèle simplifié d'une structure fibreuse tissée obtenue par tissage tridimensionnel avec une armure de type interlock. La direction trame correspond à l'axe X, la direction chaîne correspond à l'axe Y, et la direction de l'épaisseur de la structure correspond à l'axe Z. Les axes X, Y et Z sont perpendiculaires. Les fils de trame t s'étendent généralement selon la direction trame donnée par l'axe X, et les fils de chaîne c s'étendent généralement selon la direction chaîne donnée par l'axe Y. La figure 6 montre aussi une vue de côté de la structure fibreuse dans un plan XZ où les fils de trame t ondulent, et une vue de dessus dans un plan XY où les fils de chaîne c et de trame t forment un quadrillage en se croisant à 90°.

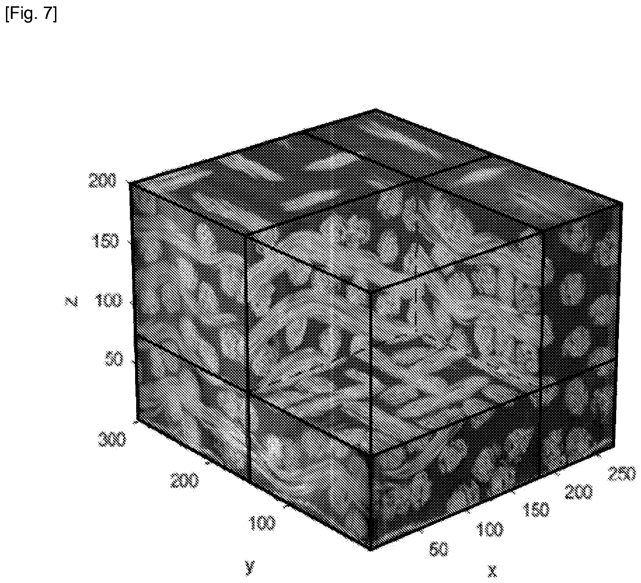

La figure 7 montre un exemple d'image volumique obtenue par tomographie à rayons X d'une structure fibreuse tissée au sein d'une pièce en matériau composite. Le Modèle de la figure 6 avec une armure interlock a été utilisé pour tisser la structure fibreuse de cet exemple. Les axes X, Y et Z sont équivalents à ceux qui ont été définis pour le Modèle de la structure fibreuse. On identifie les fils en gris clair, et la matrice en gris foncé.

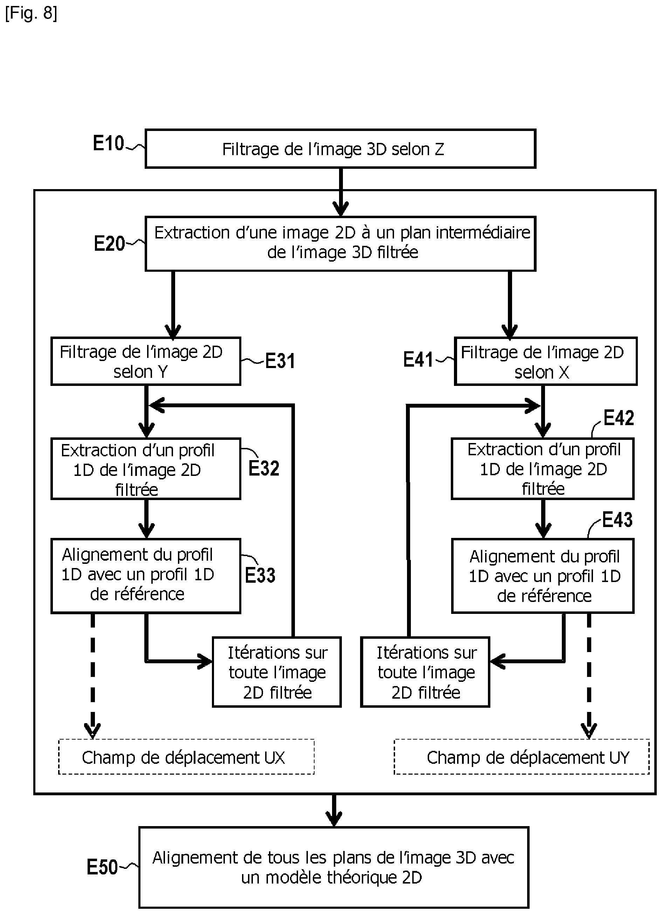

Un exemple de procédé de caractérisation d'une structure fibreuse tissée va à présent être décrit en lien avec l'ordinogramme de la figure 8.

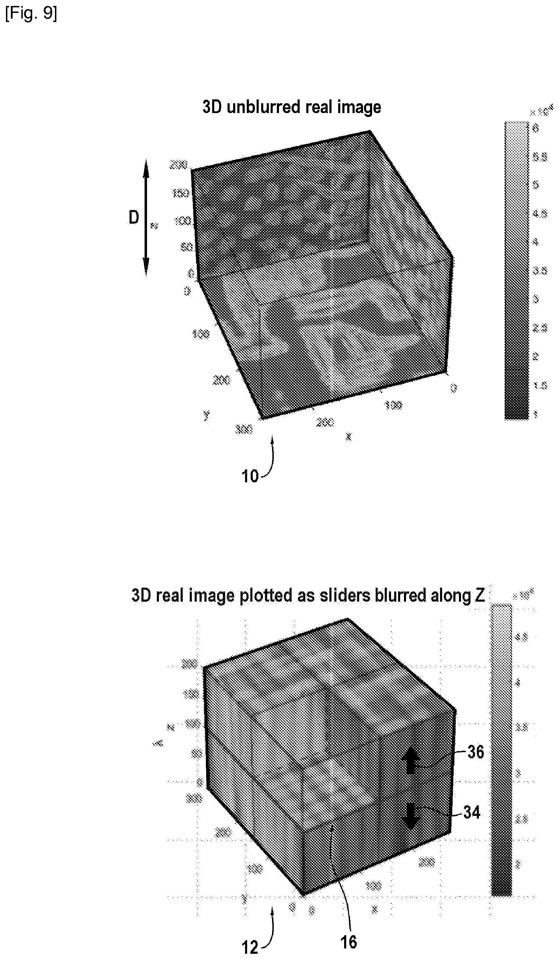

Une première étape E10 consiste à appliquer un premier traitement de filtrage à une image volumique 10 (figure 9) extraite de l'image de la figure 7. Ce premier traitement consiste à appliquer un filtre gaussien (par convolution) à l'image volumique 10 selon la direction Z, c'est-à-dire dans l'épaisseur de l'échantillon, de sorte à minimiser l'effet des modulations des fils de chaîne et de trame dans la direction Z. Le rayon du filtre gaussien est avantageusement défini dans un intervalle compris entre T et quelques T où T est la moyenne des espacements entre les couches de fils dans la direction Z. Cette moyenne peut être idéalisée, par exemple celle qui est définie dans le métier à tisser permettant d'obtenir la structure fibreuse tissée, ou encore être calculée à partir de l'échantillon considéré. On obtient ainsi l'image volumique filtrée 12 (figure 9).

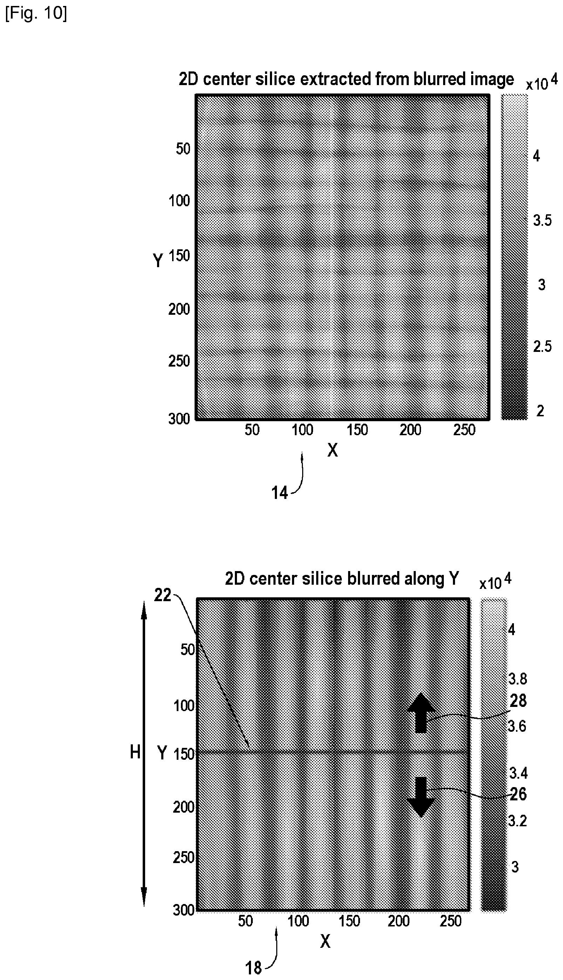

Puis, on obtient une image bidimensionnelle 14 (étape E20, figure 10) par extraction au niveau d'un plan intermédiaire 16 ou couche intermédiaire de l'image volumique filtrée 12. L'image 16 représente des fils de chaîne (selon la direction X) et des fils de trame (selon la direction Y) qui se croisent, et regroupe à l'aide du filtrage de l'information concernant les plans voisins. Le plan intermédiaire 16 est choisi de préférence à une position intermédiaire, par exemple à z0=D/2 où D est la profondeur de l'image volumique 10 selon l'axe Z. Le choix d'un plan intermédiaire 16 permet de disposer d'une couche de la structure fibreuse où les déformations sont généralement les plus faibles qu'au niveau des bords, ce qui rend plus robuste l'initialisation des algorithmes de CIN.

Ensuite, à l'étape E31, on réalise un deuxième traitement de l'image bidimensionnelle 14 par filtrage dans la direction Y. On applique un filtre gaussien ayant des propriétés similaires à celui utilisé précédemment, sauf qu'il est appliqué dans la direction Y et prend en compte pour définir la largeur du filtre l'espacement moyen entre les plans de fils de chaîne. Cette opération de filtrage permet d'atténuer les hautes fréquences dues aux intersections des fils. On obtient ainsi l'image bidimensionnelle filtrée 18 (figure 10).

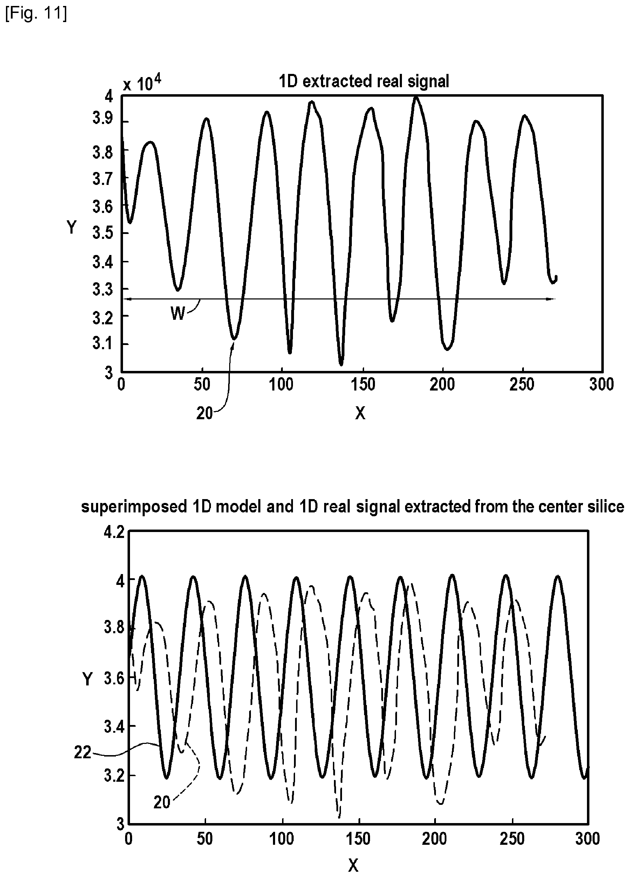

Puis, à l'étape E32, on obtient un profil unidimensionnel 20 (figure 11) représentant les positions des colonnes de

6

fils de trame, qui correspond à une extraction au niveau d'une ligne intermédiaire 22 selon la direction X de l'image bidimensionnelle filtrée 18. La ligne intermédiaire 22 est de préférence choisie à une position intermédiaire, par exemple à y0=H/2 où H est la hauteur de l'image.

Ensuite, à l'étape E33, on réalise la comparaison du profil unidimensionnel 20 obtenu à l'étape précédente avec un profil de référence 24. Le profil de référence 24 est ici obtenu à partir du modèle simplifié du tissage qui a été présenté précédemment. L'équation du modèle utilisé en tant que profil de référence 24 est donnée ci-dessous, où $\mu$ et $\sigma$ sont la moyenne et la variance du profil unidimensionnel 20 considéré, $\omega_x$ est la fréquence spatiale correspondante. Cette étape de comparaison met ici en œuvre un algorithme de CIN qui permet de déterminer un champ de déplacement UX et une correction en luminance de l'image qui permettent de relier le profil unidimensionnel 20 à son modèle simplifié.

[Math. 1]

$$M_{1D}(x,y,z) = \mu + \sigma \cdot \sin(2\pi \cdot \omega_x \cdot x)$$

Pour obtenir le champ de déplacement UX des colonnes de fils de trame dans tout le plan intermédiaire 16, il convient ensuite de faire un double passage sur l'image bidimensionnelle filtrée 18 en partant de la ligne intermédiaire 22 et jusqu'aux bords, en prenant à chaque fois le résultat concernant le champ de déplacement obtenu à la ligne précédente pour initialiser l'algorithme de CIN. On réalise un premier passage dans la direction référencée 26, et un deuxième passage dans la direction référencée 28 (figure 10) pour couvrir toute l'image bidimensionnelle filtrée.

On peut ensuite réaliser les mêmes opérations aux étapes E41, E42 et E43 pour l'autre direction du tissage, ici la direction X. On obtient après passages sur toute l'image bidimensionnelle filtrée dans la direction X, le champ de déplacement UY des colonnes de fils de chaîne dans tout le plan intermédiaire 16.

A l'issue des itérations dans tout le plan intermédiaire 16, on dispose du champ de déplacement UX et UY (et des corrections en luminance de l'image) des colonnes de chaîne et de trame dans tout le plan intermédiaire 16.

Enfin, à l'étape E50, on aligne toutes les images extraites des plans de l'image volumique filtrée 12 par l'algorithme de CIN avec un modèle simplifié bidimensionnel et itérations à partir du plan intermédiaire 16. L'équation du modèle utilisé en tant que modèle bidimensionnel simplifié est donnée ci-dessous, où $\mu$ et $\sigma$ sont la moyenne et la variance de l'image bidimensionnelle extraite au niveau du plan considéré, $\omega_x$ et $\omega_y$ sont les fréquences spatiales identifiées.

[Math. 2]

$$M_{2D}(x,y,z) = \mu + \sigma \cdot \left[\sin(2\pi \cdot \omega_x \cdot x) + \sin(2\pi \cdot \omega_y \cdot y)\right]$$

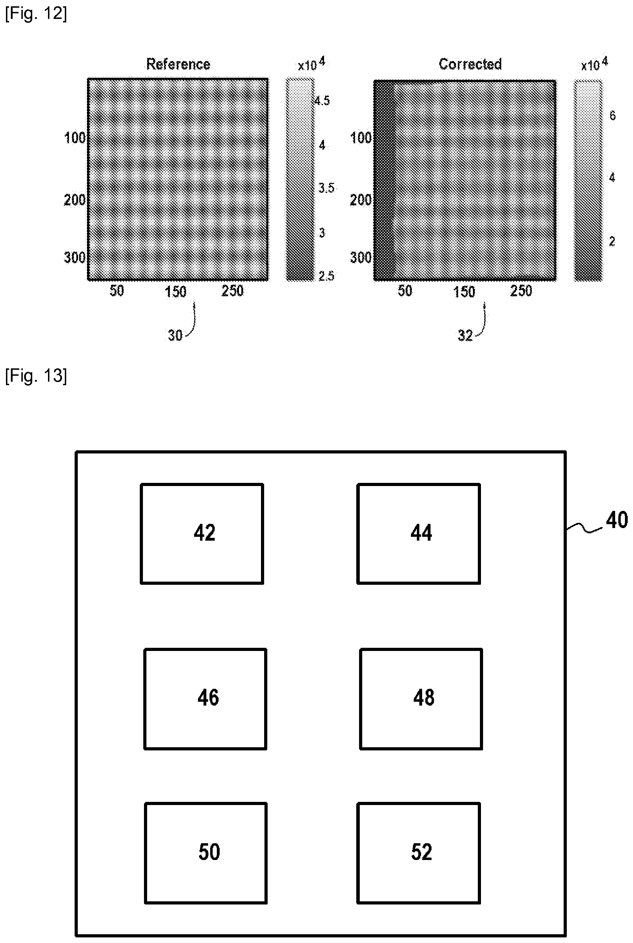

On commence par l'image bidimensionnelle 14 extraite au niveau du plan intermédiaire 16 pour laquelle on dispose des champs de déplacement UX et UY. On réalise la comparaison de cette image bidimensionnelle 14 avec son modèle simplifié comme défini ci-dessus qui est représenté par une image bidimensionnelle de référence 30 (figure 12). L'algorithme de CIN est initialisé en utilisant les champs de déplacement UX et UY trouvés à l'aide des calculs effectués à une dimension (étapes E31 à E43). On peut alors corriger l'image bidimensionnelle 14 pour l'aligner, et on obtient l'image bidimensionnelle alignée 32, et les champs de déplacement correspondant.

Il est désormais possible de procéder par itération pour réaliser l'alignement dans tout le volume, par double itération en partant du plan intermédiaire 16 et en se dirigeant vers les bords dans deux sens opposés. On réalise une première itération dans la direction référencée 34, et une deuxième itération dans la direction référencée 36 (figure 9) pour couvrir toute l'image volumique filtrée. A chaque itération, l'algorithme de CIN est initialisé avec les résultats obtenus au plan précédent.

Suite à l'étape E50, on dispose, pour tous les plans, des champs de déplacement UX et UY. L'ensemble des champs de déplacement UX et UY dans l'image volumique permet d'accéder à la transformation reliant la structure fibreuse tissée déformée à son modèle simplifié (non déformé), de redresser son image volumique 10 et de pouvoir caractériser les déformations qu'elle a subi.

Un exemple de système de caractérisation 40 pour mettre en œuvre un procédé selon un mode de réalisation de l'invention est représenté schématiquement sur la figure 13. Le système 40 comprend :

- un premier module 42 de traitement de l'image volumique pour réaliser l'étape E10,
- un module d'obtention d'une image bidimensionnelle 44 pour réaliser l'étape E20,
- un deuxième module 46 de traitement de l'image bidimensionnelle pour réaliser l'étape E31 et/ou l'étape E41,
- un module d'obtention d'un profil unidimensionnel 48 pour réaliser l'étape E32 et/ou l'étape E42,

- un module de comparaison 50 du profil unidimensionnel avec un profil de référence pour réaliser l'étape E33 et/ou l'étape E43, et
- un module de comparaison 52 d'images bidimensionnelles de différents plans de l'image volumique pour comparer lesdites images bidimensionnelles avec une image bidimensionnelle de référence, en vue de réaliser l'étape E50.

**Revendications**

1. Procédé de caractérisation à partir d'une image volumique (10) d'une structure fibreuse présentant un tissage tridimensionnel selon un motif donné entre une pluralité de fils ou torons de chaîne (c) s'étendant selon une première direction (X) et une pluralité de fils ou torons de trame (t) s'étendant selon une deuxième direction (Y) perpendiculaire à la première, le procédé comprenant :

   - un premier traitement (E10) de l'image volumique par filtrage selon une troisième direction (Z) perpendiculaire à la première (X) et à la deuxième (Y) directions de sorte à atténuer les motifs périodiques selon la troisième direction,
   - l'obtention (E20) d'une image bidimensionnelle (14) représentant des fils ou torons de chaîne et des fils ou torons de trame, ladite image correspondant à un plan intermédiaire (16) perpendiculaire à la troisième direction de l'image volumique filtrée (12),
   - un deuxième traitement (E31, E41) de l'image bidimensionnelle (14) par filtrage selon la première (X) ou la deuxième (Y) direction de sorte à atténuer les motifs périodiques selon la première (X) ou la deuxième (Y) direction,
   - l'obtention (E32, E33) d'un profil unidimensionnel (20) représentant les positions de colonnes de fils ou torons de trame ou de chaîne, ledit profil correspondant à une ligne intermédiaire (22) de l'image bidimensionnelle filtrée (18) selon une direction perpendiculaire à la direction de filtrage du deuxième traitement, et
   - la comparaison (E33, E43) du profil unidimensionnel (20) avec un profil de référence.

2. Procédé selon la revendication 1, comprenant en outre la détermination d'un champ de déplacements (UX, UY) à partir du résultat de la comparaison (E33, E43).

3. Procédé selon la revendication 1 ou 2, dans lequel l'étape de comparaison (E33, E43) est réalisée à l'aide de l'algorithme de corrélation d'images numériques .

4. Procédé selon l'une quelconque des revendications 1 à 3, dans lequel le filtrage du premier (E10) et/ou du deuxième (E31, E41) traitement est un filtrage gaussien où la largeur du filtre est déterminée en fonction d'un espacement moyen entre des couches de fils ou torons selon la direction de filtrage considérée.

5. Procédé selon l'une quelconque des revendications 1 à 4, comprenant en outre une étape d'obtention de plusieurs profils unidimensionnels suivant des lignes consécutives de l'image bidimensionnelle filtrée (18), et une étape de comparaison (E33, E43) de manière itérative à partir de la ligne intermédiaire (22) de chaque profil unidimensionnel obtenu avec le profil de référence (24) en prenant en compte le résultat de la comparaison réalisée à une ligne précédente.

6. Procédé selon la revendication 5, comprenant en outre, après avoir comparé tous les profils unidimensionnels dans la première (X) et la deuxième (Y) direction au profil de référence (24), une étape d'obtention de plusieurs image bidimensionnelles suivant des plans consécutifs de l'image volumique filtrée (12), et une étape de comparaison (E50) de manière itérative à partir du plan intermédiaire (16) de chaque image bidimensionnelle obtenue avec une image bidimensionnelle de référence (30) en prenant en compte le résultat de la comparaison réalisée à un plan précédent.

7. Procédé selon l'une quelconque des revendications 1 à 6, dans lequel l'image volumique (10) est obtenue par tomographie à rayons X.

8. Système de caractérisation (40) à partir d'une image volumique (10) d'une structure fibreuse présentant un tissage tridimensionnel selon un motif donné entre une pluralité de fils ou torons de chaîne (c) s'étendant selon une première direction (X) et une pluralité de fils ou torons de trame (t) s'étendant selon une deuxième direction (Y) perpendiculaire à la première, le système comprenant :

   - un premier module (42) de traitement de l'image volumique (10) par filtrage selon une troisième direction (Z) perpendiculaire à la première (X) et à la deuxième (Y) directions de sorte à atténuer les motifs périodiques selon la troisième direction,

- un module d'obtention (44) d'une image bidimensionnelle représentant des fils ou torons de chaîne et des fils ou torons de trame, ladite image correspondant à un plan intermédiaire (16) selon la troisième direction de l'image volumique filtrée (12),

- un deuxième module (46) de traitement de l'image bidimensionnelle (14) par filtrage selon la première (X) ou la deuxième (Y) direction de sorte à atténuer les motifs périodiques selon la première ou la deuxième direction,

- un module d'obtention (48) d'un profil unidimensionnel (20) représentant les positions de colonnes de fils ou torons de trame ou de chaîne, ledit profil correspondant à une ligne intermédiaire (22) de l'image bidimensionnelle filtrée (18) selon une direction perpendiculaire à la direction de filtrage du deuxième module de traitement, et

- un module de comparaison (50) du profil unidimensionnel (20) avec un profil de référence (24).

9. Programme d'ordinateur comportant des instructions pour l'exécution des étapes d'un procédé selon l'une quelconque des revendications 1 à 7, lorsque ledit programme est exécuté par un ordinateur.

10. Support d'enregistrement lisible par un ordinateur sur lequel est enregistré un programme d'ordinateur comprenant des instructions pour l'exécution des étapes d'un procédé selon l'une quelconque des revendications 1 à 7.


**Patentansprüche**

1. Verfahren zur Charakterisierung eines Fasergebildes, das eine dreidimensionale Verwebung gemäß einem gegebenen Muster zwischen einer Vielzahl von Kettfäden oder -litzen (c), die sich gemäß einer ersten Richtung (X) erstrecken, und einer Vielzahl von Schussfäden oder -litzen (t) aufweist, die sich gemäß einer zweiten Richtung (Y) senkrecht zu der ersten erstrecken, ausgehend von einem Volumenbild (10), wobei das Verfahren umfasst:

   - eine erste Verarbeitung (E10) des Volumenbilds durch Filterung gemäß einer dritten Richtung (Z) senkrecht zu der ersten (X) und der zweiten (Y) Richtung auf eine Weise, um die periodischen Muster gemäß der dritten Richtung abzuschwächen,
   - den Erhalt (E20) eines zweidimensionalen Bilds (14), das Kettfäden oder -litzen und Schussfäden oder -litzen darstellt, wobei das Bild einer Mittelebene (16) senkrecht zu der dritten Richtung des gefilterten Volumenbilds (12) entspricht,
   - eine zweite Verarbeitung (E31, E41) des zweidimensionalen Bilds (14) durch Filterung gemäß der ersten (X) oder der zweiten (Y) Richtung auf eine Weise, um die periodischen Muster gemäß der ersten (X) oder der zweiten (Y) Richtung abzuschwächen,
   - den Erhalt (E32, E33) eines eindimensionalen Profils (20), das die Positionen von Kolonnen von Schuss- oder Kettfäden oder -litzen darstellt, wobei das Profil einer Mittellinie (22) des gefilterten zweidimensionalen Bilds (18) gemäß einer Richtung senkrecht zu der Richtung der Filterung der zweiten Verarbeitung entspricht, und
   - den Vergleich (E33, E43) des eindimensionalen Profils (20) mit einem Referenzprofil.

2. Verfahren nach Anspruch 1, ferner umfassend die Bestimmung eines Felds von Verschiebungen (UX, UY) ausgehend von dem Ergebnis des Vergleichs (E33, E43).

3. Verfahren nach Anspruch 1 oder 2, wobei der Schritt des Vergleichs (E33, E43) mithilfe des Algorithmus der Korrelation von digitalen Bildern verwirklicht wird.

4. Verfahren nach einem der Ansprüche 1 bis 3, wobei die Filterung der ersten (E10) und/oder der zweiten (E31, E41) Verarbeitung eine Gauß-Filterung ist, bei welcher die Breite des Filters als Funktion eines mittleren Abstands zwischen Schichten von Fäden oder Litzen gemäß der in Betracht gezogenen Richtung der Filterung bestimmt wird.

5. Verfahren nach einem der Ansprüche 1 bis 4, ferner umfassend einen Schritt des Erhalts von mehreren eindimensionalen Profilen entlang aufeinanderfolgender Linien des gefilterten zweidimensionalen Bilds (18), und einen Schritt des iterativen Vergleichs (E33, E43), ausgehend von der Mittellinie (22), eines jeden erhaltenen eindimensionalen Profils mit dem Referenzprofil (24) unter Berücksichtigung des Ergebnisses des Vergleichs, der mit einer vorhergehenden Linie verwirklicht wurde.

6. Verfahren nach Anspruch 5, ferner umfassend, nachdem alle eindimensionalen Profile in der ersten (X) und der zweiten (Y) Richtung mit dem Referenzprofil (24) verglichen wurden, einen Schritt des Erhalts von mehreren zweidimensionalen Bildern entlang aufeinanderfolgender Ebenen des gefilterten Volumenbilds (12), und einen Schritt des iterativen Vergleichs (E50), ausgehend von der Mittelebene (16), eines jeden erhaltenen zweidimensionalen Bilds mit einem zweidimensionalen Referenzbild (30) unter Berücksichtigung des Ergebnisses des Vergleichs, der mit einer vorhergehenden Ebene verwirklicht wurde.

7. Verfahren nach einem der Ansprüche 1 bis 6, wobei das Volumenbild (10) durch Röntgenstrahl-Tomographie erhalten wird.

8. System zur Charakterisierung (40) eines Fasergebildes, das eine dreidimensionale Verwebung gemäß einem gegebenen Muster zwischen einer Vielzahl von Kettfäden oder -litzen (c), die sich gemäß einer ersten Richtung (X) erstrecken, und einer Vielzahl von Schussfäden oder -litzen (t) aufweist, die sich gemäß einer zweiten Richtung (Y) senkrecht zu der ersten erstrecken, ausgehend von einem Volumenbild (10), wobei das System umfasst:

   - ein erstes Modul (42) zur Verarbeitung des Volumenbilds (10) durch Filterung gemäß einer dritten Richtung (Z) senkrecht zu der ersten (X) und der zweiten (Y) Richtung auf eine Weise, um die periodischen Muster gemäß der dritten Richtung abzuschwächen,
   - ein Modul (44) zum Erhalt eines zweidimensionalen Bilds, das Kettfäden oder -litzen und Schussfäden oder -litzen darstellt, wobei das Bild einer Mittelebene (16) gemäß der dritten Richtung des gefilterten Volumenbilds (12) entspricht,
   - ein zweites Modul (46) zur Verarbeitung des zweidimensionalen Bilds (14) durch Filterung gemäß der ersten (X) oder der zweiten (Y) Richtung auf eine Weise, um die periodischen Muster gemäß der ersten oder der zweiten Richtung abzuschwächen,
   - ein Modul (48) zum Erhalt eines eindimensionalen Profils (20), das die Positionen von Kolonnen von Schuss- oder Kettfäden oder -litzen darstellt, wobei das Profil einer Mittellinie (22) des gefilterten zweidimensionalen Bilds (18) gemäß einer Richtung senkrecht zu der Richtung der Filterung des zweiten Moduls zur Verarbeitung entspricht, und
   - ein Modul (50) zum Vergleich des eindimensionalen Profils (20) mit einem Referenzprofil (24).

9. Computerprogramm, das Anweisungen zur Ausführung der Schritte eines Verfahrens nach einem der Ansprüche 1 bis 7 beinhaltet, wenn das Programm von einem Computer ausgeführt wird.

10. Computerlesbarer Datenträger, auf welchem ein Computerprogramm gespeichert ist, das Anweisungen zur Ausführung der Schritte eines Verfahrens nach einem der Ansprüche 1 bis 7 umfasst.

**Claims**

1. A method for characterizing, from a volume image (10), a fibrous structure having a three-dimensional weaving according to a given pattern between a plurality of warp yarns or strands (c) extending along a first direction (X) and a plurality of weft yarns or strands (t) extending along a second direction (Y) perpendicular to the first one, the method comprising:

   - a first processing (E10) of the volume image by filtering along a third direction (Z) perpendicular to the first (X) and second (Y) directions so as to attenuate the periodic patterns along the third direction,
   - obtaining (E20) a two-dimensional image (14) representing warp yarns or strands and weft yarns or strands, said image corresponding to an intermediate plane (16) along the third direction of the filtered volume image (12),
   - a second processing (E31, E41) of the two-dimensional image (14) by filtering along the first (X) or second (Y) direction so as to attenuate the periodic patterns along the first (X) or second (Y) direction,
   - obtaining (E32, E33) a one-dimensional profile (20) representing the positions of columns of warp or weft yarns or strands, said profile corresponding to an intermediate line (22) of the filtered two-dimensional image (18) along a direction perpendicular to the filtering direction of the second processing, and
   - comparing (E33, E43) the one-dimensional profile (20) with a reference profile.

2. The method according to claim 1, further comprising the determination of a displacement field (UX, UY) from the result of the comparison (E33, E43).

3. The method according to claim 1 or 2, wherein the comparison step (E33, E43) is performed using the digital image correlation algorithm.

4. The method according to any one of claims 1 to 3, wherein the filtering of the first (E10) and/or second (E31, E41) processing is a Gaussian filtering where the width of the filter is determined as a function of an average spacing between yarn or strand layers along the considered filtering direction.

5. The method according to any one of claims 1 to 4, further comprising a step of obtaining several one-dimensional profiles at consecutive lines of the filtered two-dimensional image (18), and a step of comparing (E33, E43) iteratively from the intermediate line (22) each obtained one-dimensional profile with the reference profile (24) by taking into account the result of the comparison made at a previous line.

6. The method according to claim 5, further comprising, after having compared all the one-dimensional profiles in the first (X) and second (Y) directions with the reference profile (24), a step of obtaining several two-dimensional images at consecutive planes of the filtered volume image (12), and a step of comparing (E50) iteratively from the intermediate plane (16) each obtained two-dimensional image with a reference two-dimensional image (30) by taking into account the result of the comparison made at a previous plane.

7. The method according to any one of claims 1 to 6, wherein the volume image (10) is obtained by X-ray tomography.

8. A system for characterizing (40), from a volume image (10), a fibrous structure having a three-dimensional weaving according to a given pattern between a plurality of warp yarns or strands (c) extending along a first direction (X) and a plurality of weft yarns or strands (t) extending along a second direction (Y) perpendicular to the first one, the system comprising:

   - a first module (42) for processing the volume image (10) by filtering along a third direction (Z) perpendicular to the first (X) and second (Y) directions so as to attenuate the periodic patterns along the third direction,
   - a module for obtaining (44) a two-dimensional image representing warp yarns or strands and weft yarns or strands, said image corresponding to an intermediate plane (16) along the third direction of the filtered volume image (12),
   - a second module for processing (46) the two-dimensional image (14) by filtering along the first (X) or second (Y) direction so as to attenuate the periodic patterns along the first or second direction,
   - a module for obtaining (48) a one-dimensional profile (20) representing the positions of columns of weft or warp yarns or strands, said profile corresponding to an intermediate line (22) of the filtered two-dimensional image (18) along a direction perpendicular to the filtering direction of the second module for processing, and
   - a module for comparing (50) the one-dimensional profile (20) with a reference profile (24).

9. A computer program including instructions for the execution of the steps of a method according to any one of claims 1 to 7, when said program is executed by a computer.

10. A computer-readable recording medium on which a computer program is recorded comprising instructions for the execution of the steps of a method according to any one of claims 1 to 7.

[Fig. 1]

[Fig. 2]

[Fig. 3]

[Fig. 4]

[Fig. 5]

[Fig. 6]

[Fig. 7]

[Fig. 8]

E10 — Filtrage de l'image 3D selon Z

E20 — Extraction d'une image 2D à un plan intermédiaire de l'image 3D filtrée

Filtrage de l'image 2D selon Y — E31

E41 — Filtrage de l'image 2D selon X

Extraction d'un profil 1D de l'image 2D filtrée — E32

E42 — Extraction d'un profil 1D de l'image 2D filtrée

Alignement du profil 1D avec un profil 1D de référence — E33

E43 — Alignement du profil 1D avec un profil 1D de référence

Itérations sur toute l'image 2D filtrée

Itérations sur toute l'image 2D filtrée

Champ de déplacement UX

Champ de déplacement UY

E50 — Alignement de tous les plans de l'image 3D avec un modèle théorique 2D

[Fig. 9]

3D unblurred real image

D

10

3D real image plotted as sliders blurred along Z

36

34

12    16

[Fig. 10]

**2D center silice extracted from blurred image** x10⁴

14

**2D center silice blurred along Y** x10⁴

18

[Fig. 11]

1D extracted real signal

superimposed 1D model and 1D real signal extracted from the center silice

[Fig. 12]

[Fig. 13]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2015033044 A1, SAFRAN
- FR 3050274 A1, SNECMA [FR]; SAFRAN [FR]
- EP 3084405 A1, SNECMA
- FR 3042869 A1, SNECMA
- WO 2006136755 A

**Littérature non-brevet citée dans la description**

- **HRISHIKESH BALE**. Characterizing Three-Dimensional Textile Ceramic Composites Using Synchrotron X-Ray Micro-Computed-Tomography. *JOURNAL OF THE AMERICAN CERAMIC SOCIETY*, 31 January 2012, vol. 95 (1), 392-402
- **SUTTON, M. A.** ; **ORTEU, J. J.** ; **SCHREIER, H.** Image correlation for shape, motion and deformation measurements: basic concepts, theory and applications. Springer Science & Business Media, 2009